Europäisches Patentamt

European Patent Office

Office européen des brevets

(11) Publication number: 0 373 496 A1

## EUROPEAN PATENT APPLICATION

(21) Application number: 89122515.3

(22) Date of filing: 06.12.89

(51) Int. Cl.5: **A23B 4/044, A47J 37/06**

(30) Priority: 14.12.88 IT 8282488

(43) Date of publication of application:
20.06.90 Bulletin 90/25

(84) Designated Contracting States:
AT BE CH DE FR GB LI LU NL SE

(71) Applicant: ROSANDRA s.n.c. del Dott. L.
PESLE e C.
III Trasversale Est Zona Industriale
I-34147 San Dorligo della Valle (TS)(IT)

(72) Inventor: Pesle, Lucio, Dr.
Via Hermet 6
Trieste(IT)

(74) Representative: Dr. Ing. A. Racheli & C.
Viale San Michele del Carso, 4
I-20144 Milano(IT)

(54) Smoking apparatus-drier for foodstuffs, particularly suitable for domestic and/or small industrial use.

(57) A smoking apparatus-drier for foodstuffs, particularly suitable for domestic and small industrial use, consisting essentially of a metal shell (1) of moderate size provided with an electrical resistance (5), inside of which the foodstuffs are placed, supported on special grills (3), which are supported in turn by a frame (2). Smoking is obtained by the carbonization of aromatized substances, placed in a container (8) located immediately above the aforesaid electrical resistance (5). Drying is obtained by prolonging the process just described for many hours.

FIG.1

## SMOKING APPARATUS-DRIER FOR FOODSTUFFS, PARTICULARLY SUITABLE FOR USE IN THE HOME OR IN SMALL INDUSTRIES

The subject of the present invention is a smoking apparatus-drier for foodstuffs, particularly suitable for domestic and/or small industrial use.

As is known, the smoking of meat, fish, cheese, salted meat and the like is a process which consists of exposing the above foodstuffs to the action of smoke, for a long or short time, with the aim of increasing their keeping properties and/or giving them a particular flavour. The smoke which causes this particular treatment is produced by means of the carbonization of wood or other vegetable components (possibly mixed with aromatic essences) of a different type according to the particular aroma it is desired to give the foodstuffs being treated.

Usually, smoking is carried out in special rooms, which in the past consisted of small buildings in masonry and now of metallic chambers, in which the smoke can be produced inside directly or sent in from a special burner located outside.

Of course, the large size of these rooms and the cost of producing and maintaining them obliges the user to carry out smoking on a large quantity of foodstuffs and, therefore, their use is limited to the food industry sector.

The aim of the present invention is to make available to users a smoking-drying plant for foodstuffs which is of small size and limited cost, in such a way as to make its use economical and rational even for the treatment of small quantities of food.

These and other aims are achieved by the smoking apparatus-drier according to the invention, which is characterized in that it consists of a shell of moderate size provided with at least one heating element and at least one opening or removable wall to allow a container with the material for smoking, a plurality of overlaid grills for supporting foodstuffs, and a tray, between the container and the lowermost grill, for collecting the liquid dripping from the foodstuffs being treated, to be inserted into it.

The heating element is preferably an electrical resistance, and the shell, convenably metallic, is provided with exhaust and ventilation openings.

The smoking apparatus-drier can be produced in a modular way, so as to make it possible to increase its height, thus allowing the user to choose the ideal temperature for the treatment of each foodstuff (by increasing the height of the smoker-drier the foodstuffs are reached by smoke at an increasingly lower temperature).

Such increase in height is obtained by means of the use of modular elements, consisting of shells provided with a large opening in the lower base and without electrical resistance, connected to each other and/or to the shell, which is provided with a resistance by means of special connection elements, these also being provided with a large-sized opening.

The above mentioned tray and the grills are supported by a frame and/or runners realized on the inner walls of the metallic shells.

The smoking apparatus-drier, according to the present invention, comprises also connection elements between the electrical resistance (located low down inside the shell) and the local electric network.

Further characteristics and advantages of the invention will be more clearly understood from the description of two of its preferred embodiments, illustrated indicatively but not restrictively in the enclosed drawings, in which:

- figure 1 shows an axonometric view of a substantially square plant smoking apparatus-drier according to the invention, partially broken away;

- figure 2 shows a grill-rack which can be inserted inside the smoking apparatus-drier in fig. 1, for supporting the foodstuffs.

- figure 3 schematically shows a smoking apparatus-drier with a cylindrical plant and the possibility to increase its height by means of modular elements.

- figure 4 is a partial mid section of the contact area between the two modular elements of the smoking apparatus-drier in fig. 3.

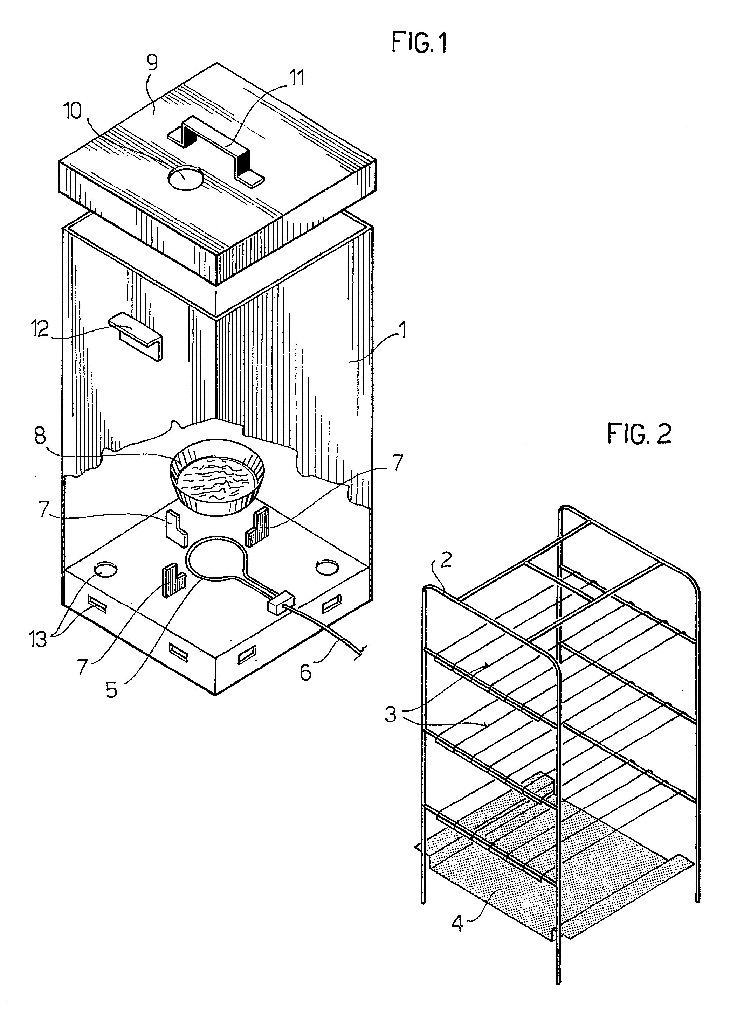

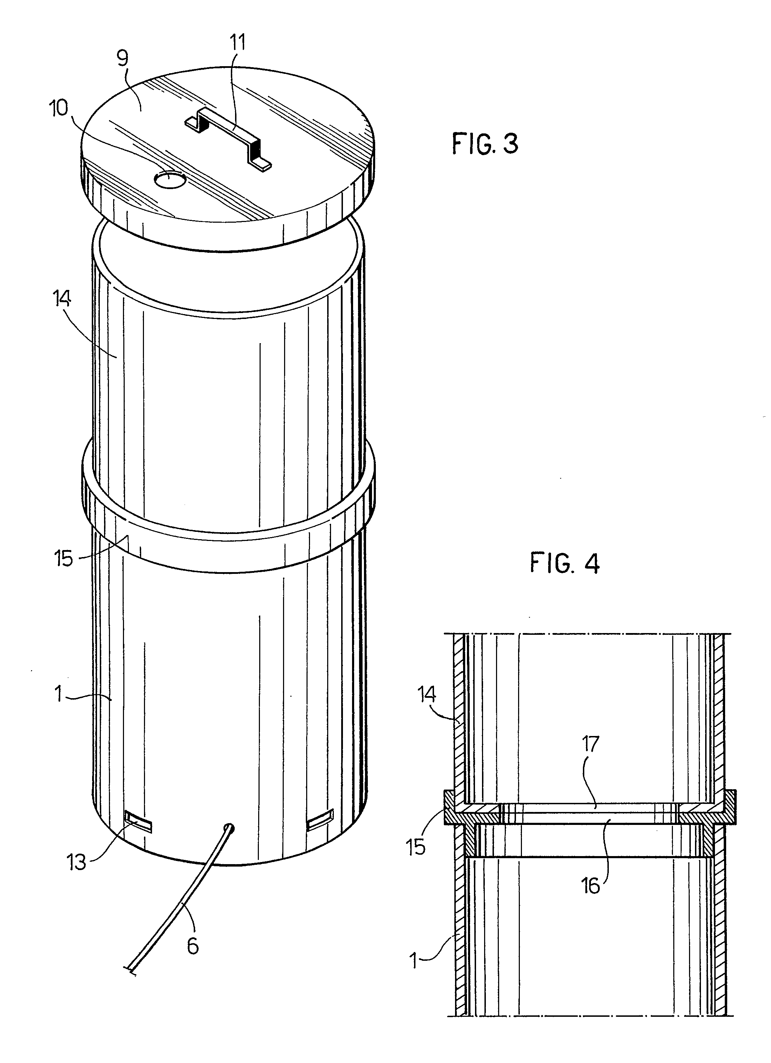

In the following description the same reference numbers are used to indicate equal or similar parts of the apparatus-driers shown in the enclosed drawings, once stated that the two geometrical embodiments have been illustrated as an example, and that the apparatus-drier in fig. 1 is extensible in height as the one in fig. 3, which is preferably provided with a circular section grill-rack.

With reference to these figures, the smoking apparatus-drier according to the invention consists of a small-sized metallic shell 1, inside which a frame 2 is located axially, supporting some grills 3 and a collecting tray 4, located below.

Still inside the shell 1, and more exactly in its lower base, there is an electrical resistance 5, (which can be connected to the network by means of an electric wire 6), around which there are three supports 7, which can support a container 8.

Above the shell 1 a cover 2 is placed, which is removable and provided with a grip-handle 11. Finally, other handles 12 are foreseen on the container, for the purpose of allowing it to be moved easily and a series of holes 13, for allowing a minimal circulation of air inside the smoking apparatus-drier.

As can be seen from figures 1 and 3, the preferred embodiments of the shell 1 are the square prismatic and the cylindrical ones, although it can be realized in any other shape. In addition, as clearly shown in figures 3 and 4, a modular element can be inserted above the shell 1, consisting of a shell 14, provided with a large opening 15 in the lower base and without electrical resistance 5. Such shell 14 is joined to the shell 1 by means of a connection element 15, e.g. a collar-shaped connection, also provided with a large-sized opening 16, so as to allow the smoke to pass easily between the two shells.

Having said this, the working of the smoking apparatus-drier which is the subject of this invention is very simple and evident.

After subjecting the foodstuffs to some preliminary treatments, such as cleaning, pickling etc., they are arranged in a regular fashion on the grills 3, which in their turn are arranged on the frame 2, together with the tray 4. Before inserting the frame 2 supporting the grills 3 inside the shell 1 and beginning smoking, it is however necessary to prearrange the container 8 inside the shell 1 itself.

This container 8 (after being filled with a mixture of wood grit, of a thickness sufficient to make smoke without flame) is placed on the supports 7, fixed to the bottom of the shell 1 in such a way that the container 8 is exactly above and near or in contact with the electrical resistance 5. Once the container 8 is prearranged in its place and after having inserted from above (according to the illustrated embodiments), the frame 2 with the grills 3 inside the shell 1, the latter is closed at the top with the cover 9, so as to prevent the smoke produced during the subsequent treatment escaping outside of the smoking apparatus-drier. At this point the electrical resistance 5 can be connected to the local network, by means of the electric wires 6.

After a certain time, thick smoke, which then starts the smoking process, begins to rise from the container 8, heated by the electrical resistance 5. The carbonization, rather than the combustion of the wood present in the container 8, is ensured by the careful selection of the size of the electrical resistance 5, by the thickness of the wood material and by the low level of oxygen present inside the shell 1. The presence of holes 10 and holes 13, in fact, has the purpose of creating a controlled air flow inside the smoking apparatus-drier, so as to reduce the risk of combustion.

The smoking process continues for 45-90 minutes and its duration depends strictly on the type of foodstuffs being treated, on its weight and on the consumer's taste.

During smoking the foodstuffs may lose organic liquids which would also fall inside the container 8 and be carbonized, thus giving rise to unpleasant smells. For this reason the presence of the tray 4 is foreseen in the lower part of the frame 2, which prevents said liquids or other substances falling into the aforesaid container 8, yet still allowing the passage of the smoke.

When it is desired to treat very fat foodstuffs, it is possible to carry out smoking at a low temperature (no higher than 35° C). In this case it will be sufficient to put on top of the shell 1 the connection element 15 and a shell 14, and to put in the latter the grills 3 supporting the foodstuffs to be treated. In this way, the foods themselves are reached by the smoke at a lower temperature and undergo a slow smoking and/or drying process, which prevents the fatty substances contained in the foodstuffs melting. If it is desired to obtain foods which can be preserved easily, it is necessary to dry them. This process can be carried out following smoking, by simply keeping the foodstuffs inside the smoking apparatus-dryer for a period of 2-36 hours. The variability of the drying time depends, of course, on the type of foodstuffs, its size and the degree of dryness which is required. It is also possible to carry out drying without smoking; in this case the container 8 with the aromatized wood is not inserted into the shell 1.

The emergence of smoke and heat produced during the process makes it advisable to use the smoking apparatus-drier in the open or in rooms in the home which have an air extractor hood (using electrically operated fans or other system).

The invention thus conceived can be varied and modified in many ways, which all come within the field of the invention, and, particularly, all the details can be substituted with others which are technically equivalent.

## Claims

1. A smoking apparatus-drier for foodstuffs, particularly for use in the home and in small industries, characterized in that it consists of a shell (1) of moderate size, provided with at least one heating element (5) and at least one opening or removable wall to allow a container (8) with material for smoking, a plurality of overlaid grills (3) for supporting the foodstuffs to be treated and a tray (4), between the container (8) and the lower grill (3) for collecting the liquids dripping from the foods being treated, to be inserted into it.

2. A smoking apparatus-drier according to Claim 1, characterized in that said at least one heating element (5) is an electrical resistance.

3. A smoking apparatus-drier, according to Claim 1 or 2, characterized in that the shell (1) has at least one upper hole (10) for the emission of the smoke and a plurality of holes (13) for permitting the circulation of the air inside it.

4. A smoking apparatus-drier, according to any one of the Claims from 1 to 3, characterized in that it is realized in modular elements (1-4) which can be overlaid in heigth.

5. A smoking apparatus-drier, according to Claims 4, characterized in that said modular elements (14) consist of shells, provided with a large lower opening (15) and without heating elements, which may be overlied therebetween and/or to the shell (1) provided with heating elements (5) by means of special connection elements (15), these also provided with a central large-sized opening (16), so as to allow the smoke to pass easily between the shells (1) and (14) themselves.

6. A smoking apparatus drier according to Claim 1, characterized in that the grills (3) and the tray (4) are supported by a frame (2) and/or by runners realized on the inner walls of the metallic shells (1, 14).

7. A smoking apparatus-drier according to Claim 1, characterized in that the container (8), for the substances for smoking, is supported by supports (7), located on the bottom of the shell (1), positioned in such a way that the container (8) itself is exactly above and near or in contact with at least one of the heating elements (5), also located on the bottom of the shell (1).

8. A smoking apparatus-drier, according to any one of the previous claims, characterized in that said shells (1, 14) are metallic.

FIG.1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 355 570 (E.W. MARTIN et al.)<br>* figures 1,2; abstract; claim 1 *<br>--- | 1-4,6-8 | A 23 B 4/044<br>A 47 J 37/06 |
| X | US-A-3 776 127 (E.T. MUSE)<br>* figure 2; abstract *<br>--- | 1-3,7 | |
| A | US-A-3 971 308 (D.G. PARKER)<br>* figure 1; abstract; claims 1-4 *<br>----- | 1 | |

TECHNICAL FIELDS SEARCHED (Int. Cl.5)

A 23 B 4/00
A 47 J 37/00

The present search report has been drawn up for all claims

| Place of search | Date of completion of the search | Examiner |
|---|---|---|
| BERLIN | 05-03-1990 | SCHULTZE D |

EPO FORM 1503 03.82 (P0401)